# FASCICULE DE BREVET EUROPEEN

(11) **EP 3 368 173 B1**
(45) Date de publication et mention de la délivrance du brevet: **25.03.2020**
(21) Numéro de dépôt: 15798528.4
(22) Date de dépôt: 30.10.2015
(51) Int. Cl.: B01D 3/00, B01J 19/30, B01J 19/32, B01D 53/18

(54) **COLONNE D'ECHANGE DE CHALEUR ET/OU DE MATIERE ENTRE DEUX FLUIDES COMPORTANT UN PLATEAU COLLECTEUR ET DES MOYENS DE SEPARATION DES FLUIDES**
SÄULE FÜR WÄRME- UND/ODER MASSENAUSTAUSCH ZWISCHEN ZWEI FLÜSSIGKEITEN MIT EINER SAMMELSCHALE UND FLÜSSIGKEITSTRENNVORRICHTUNG
COLUMN FOR HEAT AND/OR MASS EXCHANGE BETWEEN TWO FLUIDS COMPRISING A COLLECTION TRAY AND FLUID SEPARATION MEANS

(43) Date de publication de la demande: 05.09.2018
(73) Titulaire: IFP Energies nouvelles, 92500 Rueil-Malmaison (FR); Total S.A., 92400 Courbevoie (FR); Axens, 92500 Rueil Malmaison (FR)
(72) Inventeur: PERDU, Gauthier, F92150 Suresnes (FR); SALAIS, Clément, 75012 Paris (FR); CARLIER, Vincent, 92600 Asnières sur Seine (FR); WEISS, Claire, 92420 Vaucresson (FR); MAUBERT, Thomas, 75018 Paris (FR); FOURNIE, Maxime, 75013 Paris (FR); ALIX, Pascal, 38150 Roussillon (FR); FOURATI, Manel, 69200 Venissieux (FR); BEARD, Philippe, 69230 Saint Genis-Laval (FR)
(74) Mandataire: IFP Energies nouvelles
(86) Numéro de dépôt international: PCT/FR2015/052933
(87) Numéro de publication internationale: WO 2017/072417

(56) Documents cités:
- EP-A2- 0 364 117
- EP-B1- 1 846 150
- WO-A1-2015/090476
- DE-A1-102013 107 357
- FR-A1- 2 961 115
- US-A- 3 290 024
- US-A- 4 314 972
- US-A- 5 464 573
- US-A- 5 762 668
- US-A1- 2008 314 729

## Description

La présente invention concerne le domaine des colonnes de contact gaz/liquide. Les domaines d'applications de l'invention peuvent être le traitement de gaz, le captage du CO₂, la déshydratation, la séparation de contaminants présents dans des flux gazeux par une solution liquide ou encore la distillation de composés liquides en mélange.

L'industrie utilise de très nombreux contacteurs (colonnes de contact) gaz/liquide. Ces derniers peuvent être utilisés pour la séparation de produits, comme les procédés de distillation, ou encore l'absorption de contaminants, comme les procédés de traitement aux aminés, dans le secteur du traitement de gaz et/ou de captage du CO₂. Lorsqu'il s'agit de retirer des contaminants présents dans le gaz, comme le CO₂, l'eau, l'H₂S, par des procédés de lavage par un liquide, on utilise des contacteurs verticaux, qui lavent le gaz par circulation à contre-courant du liquide. Ainsi, les contaminants du gaz sont retenus par le liquide. On entend également par contacteurs verticaux les tours de régénération, dans lesquelles les solvants (liquide) chargés en contaminants sont épurés par contact avec un gaz, qui favorise l'extraction des contaminants présents dans la solution chargée en contaminants.

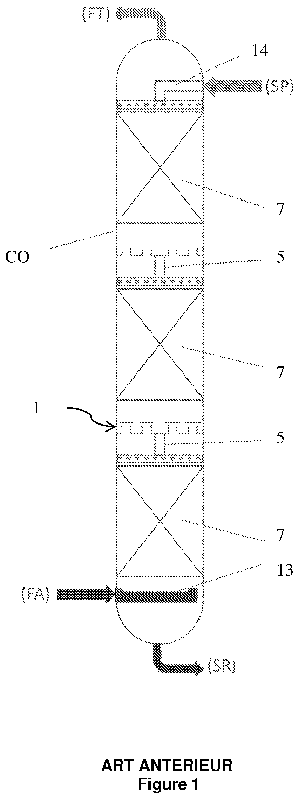

Il existe une grande variété de types de contacteurs gaz/liquide. Classiquement, les contacteurs verticaux peuvent contenir des internes de contact de type garnissage vrac et/ou garnissage structuré, et mettre en oeuvre plusieurs lits de garnissages avec redistribution intermédiaire du flux de liquide, tel que schématisé sur la figure 1. Par exemple, pour le cas de l'absorption de gaz acides par une solution aqueuse d'amine(s), on peut utiliser une colonne de contact gaz/liquide CO contenant du garnissage, réparti en plusieurs lits de garnissage 7. La colonne de contact CO reçoit le fluide gazeux à traiter en fond de colonne FA, et le solvant (liquide) pauvre en tête de colonne SP. La colonne de contact CO délivre le fluide gazeux traité FT, épuré d'une partie des contaminants, en tête de colonne et le solvant riche SR, chargé d'une partie des contaminants contenus dans le fluide gazeux à traiter, en fond de colonne. Le transfert des contaminants du fluide gazeux vers le solvant liquide est opéré via la mise en contact intime de la phase liquide descendante et de la phase vapeur ascendante au sein du contacteur, au niveau des lits de garnissage 7. Les lits de garnissage 7 sont composés d'éléments solides qui présentent une surface de contact élevée, sur laquelle le liquide est réparti de manière uniforme et s'écoule vers le bas, ce qui favorise le contact avec la phase vapeur ascendante, et permet ainsi de transférer efficacement de la matière et/ou de la chaleur entre les deux fluides.

Deux grandes familles de garnissages sont disponibles actuellement. Un premier type de garnissage est constitué par une multiplicité d'éléments solides singuliers, possiblement identiques et généralement de taille modérée (dizaine de centimètres), déposé en vrac au sein des contacteurs, d'où le nom de garnissage vrac. Le second type, appelé garnissage structuré, est généralement formé par des tôles d'aciers mises en forme et arrangées de manière particulière.

Pour tous les types de garnissage, afin de disposer de toute la surface développée par l'interne de transfert, il convient que chacun des flux évoluant à contre-courant s'écoule de la manière la plus uniforme possible sur l'ensemble de la section de la colonne, et des internes de contact de la colonne. A cet effet, le solvant pauvre SP, en tête de colonne, est injecté de manière uniforme sur la section du lit de garnissage de tête 7, à l'aide d'un distributeur liquide 14. Généralement, les éléments constitutifs des lits de garnissage permettent de former ou/et de maintenir une distribution homogène des fluides sur l'ensemble de la section de contact. Toutefois, lorsqu'une forte hauteur de contact est requise, il est préférable de recourir à une pluralité de lits de garnissage 7 et une pluralité de systèmes de redistribution liquide associés. En effet, lors du passage d'un liquide au sein d'un garnissage, ce dernier tend à s'accumuler dans certaines zones de passage préférentiel, générant des gradients de concentrations radiaux (sur la section de la colonne) pour les phases gaz et liquide, dégradant ainsi les performances de mises en contact des fluides liquide et gazeux et l'efficacité globale de la colonne. Il devient alors préférable de dédier une partie de la colonne à l'installation de dispositifs de collecte et de redistribution du liquide. Ceci dans le but de permettre la redistribution de la manière la plus homogène possible du flux de liquide sur la surface du garnissage inférieur 7.

Le « Fractionation Research Inc. » (FRI) conseille de limiter la hauteur d'un lit de garnissage à une hauteur de huit mètres et de mélanger à nouveau la phase liquide avant de la réintroduire sur une section de garnissage inférieure (référence FRI, Fractionation Tray Design Handbook, vol 5 : Design Practices). Cette hauteur maximale peut varier selon les cas, et dépend de nombreux paramètres qui peuvent être : les conditions et débits de fonctionnement, des perturbations externes à la colonne comme les forces de mouvements sur les colonnes installées dans des conditions flottants sur des supports, tels que des barges et des navires de production, le type de garnissage, les propriétés des fluides, les conditions opératoires... La segmentation de la zone de contact en plusieurs lits de garnissage 7 nécessite alors la mise en oeuvre de systèmes de redistribution liquide 5, reliés à des plateaux collecteurs 1. Ils sont installés entre deux lits de garnissage, soit pour cet exemple illustré, au-dessus des lits de garnissage 7 intermédiaire et inférieur.

Généralement, le comportement du flux liquide est considéré comme étant le plus critique pour le bon fonctionnement des contacteurs, mais le comportement du fluide gazeux est également un paramètre important de l'efficacité de la colonne. En effet, le flux gazeux est généralement introduit en fond de contacteur à l'aide d'un distributeur gaz (13 selon l'exemple de la figure 1). A la manière du distributeur liquide appliqué au liquide, le distributeur gaz permet d'uniformiser au mieux le profil de vitesse de la phase vapeur ascendante sur l'ensemble de la section inférieure du lit de garnissage afin d'améliorer les performances de fonctionnement du contacteur. Il est également important que le gaz ait des vitesses élevées et homogènes, afin de favoriser le contact intime avec le liquide et d'assurer l'efficacité du transfert des contaminants.

Aussi, pour les colonnes de contact de l'art antérieur, on observe des entrainements de liquide par effet cinétique de la vitesse du gaz, du fait de la vitesse du gaz. Les entrainements de liquide par la phase vapeur, entre les zones de contact, ont été perçus comme des éléments perturbateurs du bon fonctionnement des contacteurs gaz/liquide. Le liquide s'écoulant dans la zone supérieure du redistributeur liquide est pollué par ces entrainements liquides plus riches en composés à éliminer (CO₂ et/ou H₂S dans le cas d'une colonne d'absorption, résidus dans le cas de la distillation), conduisant à une perte d'efficacité de séparation de la zone supérieure. On parle alors de rétro-mélange (ou en anglais « backmixing »). Le fonctionnement de la colonne est d'autant plus sensible au rétro-mélange que l'on est proche de l'équilibre thermodynamique et que les transferts entre phases deviennent faibles sur les étages de transfert de la colonne (distillation, strippage de l'anglais stripper, absorption H₂S...). Par ailleurs, l'entrainement de liquide est d'autant plus important que les vitesses du gaz sont élevées. La tendance au moussage du liquide, qui est un phénomène connu des procédés de lavage aux solutions aqueuses aminés, accroît également les pertes d'efficacité. De telles solutions, présentant une tendance au moussage, lorsqu'elles sont utilisées avec des vitesses élevées de gaz, accroissent encore les pertes d'efficacité, par des phénomènes de bouchage et de passage préférentiels du gaz dans des sections de passage réduites. Aussi, l'entrainement de liquide par la phase vapeur peut engendrer un engorgement précoce des colonnes. Le phénomène d'entrainement des gouttelettes par la phase vapeur se produit lorsque la force d'entrainement des gouttelettes par le gaz ascendant est supérieure à la force de gravité qui entraine les gouttelettes vers le bas.

De nombreux développements ont été réalisés au niveau des contacteurs gaz/liquide afin de limiter le phénomène d'entrainement du liquide par la vapeur. Certains développements notamment consistent à augmenter la hauteur de séparation « dite zone de désengagement », où les gouttelettes de liquides peuvent retomber avant d'atteindre la zone de transfert immédiatement supérieure, et la polluer.

Par exemple, pour des contacteurs à plateaux, une zone entre chaque plateau contacteur (zone de contact) est prévue pour permettre le désengagement de la vapeur et du liquide. Pour limiter cette hauteur de désengagement (séparation des gouttelettes de liquide), le brevet US 5,762,668 propose d'assembler une épaisseur de garnissage structuré au dessous de plateaux de contact gaz/liquide afin de séparer plus efficacement le liquide entraîné avec la vapeur du plateau de contact gaz/liquide inférieur, et ainsi réduire la hauteur de désengagement. Dans la même thématique, les brevets US 4,698,138 et US 8,083,901 indiquent des géométries particulières pour des dispositifs de couverture des cheminées de plateau collecteur de liquide afin de limiter l'entrainement de liquide avec la phase vapeur.

Dans les contacteurs gaz/liquide à garnissage, il apparaît que les conditions observées en sortie du système de redistribution du liquide amplifient tout particulièrement le phénomène d'entrainement de gouttelettes liquides (l'encombrement des distributeurs de liquide diminue la section de passage gaz engendrant des accélérations importantes des vitesses gaz et donc une augmentation de la force d'entrainement des gouttelettes par le gaz). De plus, le mode d'injection du liquide, au niveau des distributeurs liquide, peut exacerber l'entrainement liquide par la phase vapeur. Le brevet US 2014/0361449 mentionne notamment que pour des distributeurs liquide à spray, jusqu'à 5% du débit de liquide peut être entrainé avec la phase vapeur ascendante sous forme de brouillard.

Parmi les systèmes de redistribution liquide installés entre deux lits de garnissage successifs, deux types de systèmes sont utilisés pour collecter le liquide issu du lit de garnissage supérieur et le redistribuer vers le lit de garnissage inférieur.

Un premier type de système utilise un dispositif unique permettant à la fois de collecter le liquide issu du lit de garnissage supérieur et de le redistribuer sur le lit de garnissage inférieur tout en permettant le passage de la phase vapeur, généralement à l'aide de cheminées. Ce sont généralement des systèmes simples et économiques mais qui favorisent modérément le mélange de la phase liquide. Au sein de ce type de système trois grandes familles se distinguent :
- Des distributeurs liquides à cheminées gaz : Une garde liquide s'établit sur toute la section du plateau distributeur, et alimente le lit de contact (garnissage) via des orifices uniformément répartis sur le fond du plateau. Le gaz est acheminé via des cheminées (ex. US 2013/0277868A). La figure 2 montre un plateau distributeur 1 à cheminées classique, muni de cheminées 2 pour le passage du gaz, les cheminées étant couvertes par des « chapeaux » 3 pour éviter le passage de liquide au sein des cheminées gaz (en situation d'écoulement à contre-courant), et des orifices 4 pour le passage de liquide.
- Des distributeurs liquides à caissons liquide : Une garde liquide s'établit sur un ensemble de caissons muni d'orifices d'alimentation, et le gaz est acheminé par l'espace restant (ex. US4909967A).
- Des distributeurs liquides à cheminées liquide : ces distributeurs fonctionnent selon le même principe que le distributeur à cheminées gaz. La différence est que le liquide est distribué via des cheminées pouvant avoir des orifices situés à plusieurs hauteurs différentes, permettant ainsi de faire passer une plus large gamme de débit que dans le cas de simples orifices dans le fond de plateau. Le gaz est lui acheminé via des cheminées pouvant avoir une forme cylindrique ou parallélépipédique (ex. US5132055A, US4432913).

Un second type de système utilise des dispositifs distincts pour collecter le liquide issu du lit de garnissage supérieur et pour le redistribuer sur le lit de garnissage inférieur, le liquide étant transmis d'un système à l'autre via des jambes (conduites) de transfert liquide ; le passage de la phase vapeur étant généralement réalisé à l'aide de cheminées. Ce sont généralement des systèmes robustes, qui favorisent le mélange de la phase liquide. Au sein de ce type de système, il convient de séparer la partie collectrice de la partie distributrice. Le document « Process Engineering Guide: GBHE-PEG-MAS-612 Design and Rating of Packed Distillation Columns » illustre notamment ces différents systèmes.

Les dispositifs de collecte du liquide se différencient généralement par le moyen permettant de laisser passer le flux vapeur :
- plateaux collecteurs à cheminées gaz circulaires, munies de chapeaux,
- plateaux collecteurs à cheminées gaz rectangulaires, munies de chapeaux, et
- plateaux collecteurs à cheminées gaz de type gouttière.

Les dispositifs de distribution du liquide se distinguent généralement sous 4 familles :
- distributeurs à auges (en anglais « through distributor »), plutôt compacts mais exigeant une horizontalité parfaite (déconseillés en services critiques et en conditions offshore flottantes),
- plateau à cheminées perforées (en anglais « orifice riser type distributor »), plutôt compact, mais réservé aux colonnes de faible diamètre (inférieur à 1 m), exigeant une horizontalité parfaite : les défauts d'uniformité de distribution sont généralement importants (déconseillés en services critiques et en conditions offshore flottantes),
- distributeur tubulaires à orifices (en anglais « perforated piping distributor »), peu compact, présentant une perte de charge supérieure aux distributeurs précédents et nécessitant une hauteur statique de liquide généralement plus importante, mais délivrant généralement une bonne distribution du liquide, et
- pulvérisateurs ou buses (en anglais « spray distributor »), peu compacts, nécessitant, comme le distributeur précédent, une hauteur statique importante (une pompe peut également être utilisée pour assurer la force de distribution). La performance d'uniformité de distribution est plus modérée sur le liquide (à cause de la création de zones de recouvrement des cônes liquides). L'impact des gouttelettes sur le garnissage est important pour disperser la force liquide et le système est très fortement sujet à l'entrainement liquide par création de brouillard de gouttelettes.

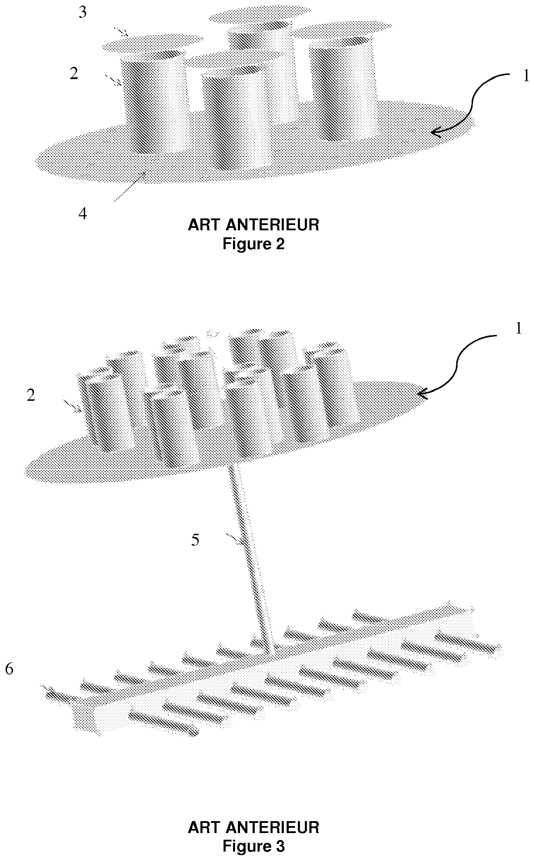

La figure 3 montre un exemple de ce dernier type de système qui dissocie la collecte du liquide de sa distribution. Le plateau collecteur 1 comporte des cheminées 2 pour le passage du gaz. Le système pour la distribution du liquide comprend une conduite verticale 5 et une pluralité d'arroseurs 6 (tubes horizontaux munis d'orifices ou de buses).

Pour des conditions offshore flottants, c'est généralement ce type de système illustré sur la figure 3, assurant la collecte et la redistribution du liquide entre deux lits de garnissage, qui est privilégié. Aussi, le plateau collecteur de liquide est relié au système de distribution par une ou plusieurs conduites verticales relativement longues afin que le système distributeur crée la hauteur statique suffisante quelles que soient les conditions de houle rencontrées. En effet, la conduite verticale est dimensionnée de manière à ce que la variation de la hauteur de liquide due à un défaut d'horizontalité soit largement inférieure à la hauteur de la conduite de liquide alimentant le système de distribution (US008118284B2, US 2004/0020238 A1). Dans ce cas, le système de distribution de liquide peut être formé par un ou plusieurs arroseurs, et le gaz est acheminé par des cheminées situées au niveau du plateau collecteur. Le document WO2015/090476 divulgue des déflecteurs pour le gaz entre deux lits de garnissage.

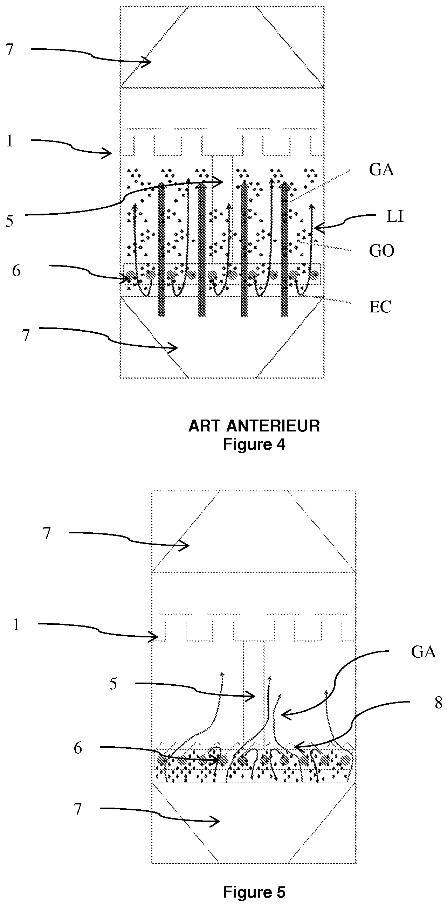

Les conditions rencontrées en offshore flottant amplifient tout particulièrement les entrainements liquides. D'une part, du fait d'une hauteur maximale des lits de garnissage réduite (dégradation de la distribution liquide avec l'effet de la houle), davantage de systèmes de redistribution liquide doivent être considérés, démultipliant ainsi les zones inter-lits sujettes aux entrainements liquides. D'autre part, pour toutes les conceptions envisageables du système de redistribution, et en particulier pour le système de redistribution illustré sur la figure 3, la force qui permet la redistribution du liquide est uniquement créée par la hauteur statique de liquide dans le distributeur. Les fortes hauteurs statiques de liquide, notamment dans le cas des redistributeurs en conditions offshore flottantes, conduisent à un phénomène d'éclatement des jets liquides s'écoulant à la surface du garnissage, générant ainsi des fines gouttelettes qui peuvent être entraînées par la phase gaz ascendante. Aussi, en offshore flottant, il est possible que localement de très fortes vitesses gaz soient obtenues du fait de possibles importantes disparités des flux de liquide et de vapeur au sein de colonnes de séparation. Ces importantes disparités peuvent être engendrées par les mouvements de la houle, et qui pourraient accroître les phénomènes d'entrainement liquide. La qualité de la distribution du liquide en tête de lit peut alors être dégradée. Ainsi ces éclaboussements (en anglais « splashing »), combinés à l'écoulement ascensionnel de la phase gaz, engendrent des entrainements de gouttelettes liquides non négligeables vers la zone supérieure qui s'ajoutent aux entrainements de liquide générés par le flux gazeux lui-même lors du contact avec la phase liquide au sein des contacteurs gaz/liquide. La figure 4 illustre ce phénomène. Sur la figure 4, un plateau collecteur 1 est placé entre deux lits de garnissage 7. Le plateau collecteur est relié à un système de distribution qui comporte une conduite verticale 5 et un système d'arroseurs 6 (tubes horizontaux). Sur cette figure, la trajectoire ascendante du gaz est indiquée par les flèches GA, les éclaboussements à la surface du garnissage 7 sont indiqués EC et l'entraînement des gouttelettes liquides GO (phase dispersée) par le gaz est indiqué par les flèches LI.

Pour limiter l'entrainement de liquide par la phase gaz, jusqu'à présent les constructeurs de contacteurs gaz/liquide utilisant des garnissages (vrac et/ou structurés) privilégient de rendre moins favorables les conditions de redistribution du liquide. Pour cela, les brevets US 2014/0361449, US 6,722,639, US 6,575,437 et US 5,139,544 notamment, décrivent généralement l'emploi de déflecteurs pour éviter un contact direct entre le flux liquide sortant du redistributeur et le flux vapeur ascendant, et privilégient de limiter le contact direct entre le liquide et la phase vapeur seulement au niveau du lit de garnissage inférieur.

La présente invention concerne une colonne d'échange de matière et le cas échéant de chaleur entre un gaz et un liquide. La colonne comporte au moins un plateau collecteur et un système de distribution du liquide agencés entre deux lits de garnissage, et des moyens de séparation du gaz et du liquide. Ainsi, l'entrainement de liquide par le gaz est limité dans la zone inter-lits. La présente invention propose d'agencer des moyens de séparation du gaz et du liquide entre le plateau collecteur et les moyens de distribution liquide, de manière à ce que le gaz qui traverse le plateau collecteur soit « sec », c'est-à-dire avec peu de gouttelettes entraînées par le gaz. L'objectif de l'invention est donc l'amélioration de la performance des colonnes équipées de plusieurs lits d'internes avec des dispositifs de collection et de redistribution intermédiaires.

### Le dispositif selon l'invention

L'invention concerne, selon la revendication 1, une colonne d'échange de matière et/ou de chaleur entre un gaz et un liquide comportant au moins deux lits de garnissage, un plateau collecteur agencé entre deux lits de garnissage, et des moyens de distribution pour distribuer ledit liquide collecté par ledit plateau collecteur depuis un lit de garnissage supérieur sur un lit de garnissage inférieur, lesdits moyens de distribution étant situés en-dessous dudit plateau collecteur, et comportant au moins une conduite verticale d'alimentation reliée audit plateau collecteur et au moins un tube sensiblement horizontal relié à ladite conduite d'alimentation, ledit tube sensiblement horizontal comportant au moins un orifice et/ou une buse pour la distribution dudit liquide, caractérisée en ce que la colonne comporte en outre des moyens de séparation dudit liquide entraîné par le gaz, lesdits moyens de séparation étant agencés entre ledit plateau collecteur et lesdits moyens de distribution et lesdits moyens de séparation dudit liquide entraîné par le gaz occupent sensiblement de 75 à 98 % de la section transversale de la colonne disponible pour le passage de la vapeur, et sont disposés plus proches desdits moyens de distribution que dudit plateau collecteur.

Selon l'invention, lesdits moyens de séparation dudit gaz et dudit liquide comportent au moins un élément d'impact, sur lequel ledit liquide impacte puis descend dans ladite colonne par gravité.

Selon un mode de réalisation de l'invention, ledit élément d'impact est une plaque inclinée.

Avantageusement, ladite plaque a sensiblement une forme de L inversé.

Selon une variante, ledit élément d'impact comporte au moins une chicane.

De préférence, ladite chicane est formée par au moins un chevron.

En variante, ledit élément d'impact est formé par un treillis ou matelas de fibres.

Conformément à une variante, ledit élément d'impact est formé par un garnissage.

Selon un aspect de l'invention, ledit élément d'impact a sensiblement la forme d'une corne de bélier.

Selon une caractéristique, lesdits moyens de séparation dudit gaz et dudit liquide comportent en outre au moins une canule pour le drainage dudit liquide.

De manière préférentielle, lesdits moyens de séparation dudit gaz et dudit liquide sont agencés autour de ladite conduite verticale d'alimentation.

De plus, ledit plateau collecteur peut comporter au moins une cheminée pour le passage dudit gaz.

En outre, l'invention concerne une utilisation d'une colonne selon l'une des caractéristiques précédentes pour un procédé de traitement de gaz, de captage de gaz acides, de distillation, de déshydratation ou de séparation d'air.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1, déjà décrite, illustre un schéma de contacteur gaz/liquide contenant du garnissage, opérant à contre-courant, et mettant en œuvre plusieurs lits de garnissages avec redistribution intermédiaire du flux de liquide, selon l'art antérieur.
La figure 2, déjà décrite, illustre un plateau collecteur à cheminées selon l'art antérieur.
La figure 3, déjà décrite, illustre un plateau collecteur équipé d'un système de distribution selon l'art antérieur.
La figure 4, déjà décrite, illustre le phénomène d'entrainement liquide par la vapeur pour un plateau collecteur équipé d'un système de distribution selon l'art antérieur.
La figure 5 illustre une portion d'une colonne selon un premier mode de réalisation de l'invention.
La figure 6 illustre une portion d'une colonne selon un deuxième mode de réalisation de l'invention.
La figure 7 illustre une portion d'une colonne selon un troisième mode de réalisation de l'invention.
La figure 8 illustre un moyen de séparation selon un mode de réalisation de l'invention.

### Description détaillée de l'invention

La présente invention concerne une colonne d'échange de matière et possiblement de chaleur entre un gaz et un liquide. Selon l'invention, la colonne d'échange comporte au moins deux lits de garnissage. On appelle lit de garnissage une section de garnissage qui est répartie sur une certaine hauteur de la colonne. Le garnissage peut être du garnissage vrac ou du garnissage structuré. Le garnissage, correspond à un contacteur, et permet la mise en contact du liquide et du gaz, afin de permettre les échanges de chaleur et/ou de matière entre les fluides.

Selon l'invention, la colonne d'échange comporte au moins un système de redistribution du liquide comprenant un plateau collecteur et un distributeur liquide. Chaque système de redistribution du liquide est agencé entre deux lits de garnissage, dans une zone appelée zone inter-lits. Le plateau collecteur collecte le liquide sur sa surface supérieure, et permet le passage du gaz à travers le plateau. Le passage du gaz à travers le plateau peut être notamment réalisé au moyen de cheminées, équipées ou non de chapeaux. En effet, lors du passage d'un liquide au sein d'un garnissage, ce dernier tend à s'accumuler dans certaines zones de passage préférentiel, générant des gradients de concentrations radiaux (sur la section de la colonne) pour les phases gaz et liquide, dégradant ainsi les performances de mises en contact des fluides liquide et gazeux et l'efficacité globale de la colonne. Lorsqu'une forte hauteur de contact est requise, il devient préférable de recourir à une pluralité de lits de garnissage et une pluralité de dispositifs de collecte et de redistribution du liquide. Dans ce cas, il est avantageux de redistribuer de la manière la plus homogène possible le flux de liquide sur la surface du garnissage inférieur. Il devient généralement préférable d'utiliser des collecteurs / redistributeurs de liquide entre deux sections de garnissage, au-delà d'une hauteur de garnissage de huit mètres (hauteur préconisée par le FRI). Cette hauteur maximale préconisée peut être modifiée (généralement diminuée) selon les conditions de fonctionnement (offshore flottant, type de garnissage, propriétés des fluides, conditions opératoires...).

Selon l'invention, la colonne d'échange comporte des moyens de distribution du liquide. Les moyens de distribution du liquide sont situés en-dessous du plateau collecteur dans la zone inter-lits, et sont reliés au plateau collecteur pour le passage du liquide. Les moyens de distribution du liquide permettent de distribuer le liquide en provenance du plateau collecteur sur un lit de garnissage inférieur. Ainsi, le liquide s'écoule par gravité d'un lit de garnissage supérieur, au travers du plateau collecteur et des moyens de distribution pour être distribué sur un lit de garnissage inférieur. Les moyens de distribution peuvent être de toute forme connue, notamment celle illustrée à la figure 3 (distributeur tubulaire à orifice). Alternativement, les moyens de distribution peuvent être des moyens de distribution à spray (avec des buses) ou à auges. Les moyens de distribution du liquide permettent une bonne distribution du liquide sur le lit de garnissage inférieur, y compris dans des conditions offshore flottant (en mer), pour lesquelles la colonne peut être inclinée par rapport à la verticale.

La colonne selon l'invention comporte en outre des moyens de séparation du gaz et du liquide. Les moyens de séparation du gaz et du liquide sont agencés entre le plateau collecteur et les moyens de distribution du liquide. Les moyens de séparation du gaz et du liquide permettent de séparer les gouttelettes de liquide du gaz qui les entraîne vers le haut. Ainsi, l'entraînement des gouttelettes de liquide par le gaz est réduit, le phénomène de rétro mélange est limité et les performances de la colonne sont conservées. L'agencement des moyens de séparation entre le plateau collecteur et les moyens de distribution permet que le gaz traversant le plateau distributeur (en entrée et en sortie) soit « sec », c'est-à-dire sans gouttelettes de liquide entraînées par le gaz. Par gaz « sec » l'on entend un gaz entrainant moins de 10 mL de gouttelettes liquides par Sm³ de gaz, entrainant de manière préférée moins de 1 mL et entrainant de manière plus préférée moins de 0.1 mL.

Les moyens de séparation du gaz et du liquide sont situés à proximité des moyens de distribution, c'est-à-dire juste au-dessus des moyens de distribution, et éloignés du plateau collecteur : les moyens de séparation du gaz et du liquide sont alors plus proches des moyens de distribution que du plateau collecteur. Ainsi, la zone d'entraînement des gouttelettes est limitée à une faible hauteur, et le reste de la zone d'inter-lits peut poursuivre l'action de dés entraînement par la force de gravité. Le liquide séparé est réémis à proximité directe du lit de garnissage inférieur, et le phénomène de réentrainement est amoindri. Ainsi, les gouttelettes sont avantageusement réinjectées dans le lit de garnissage inférieur par gravité.

Selon le mode de réalisation de l'invention (pouvant être combiné avec les différentes variantes décrites ci-après), les moyens de distribution comprennent au moins une conduite verticale d'alimentation reliée au plateau collecteur, et au moins un, de préférence une pluralité de, tube(s) sensiblement horizontal (horizontaux) relié(s) à la conduite d'alimentation. Chaque tube horizontal est équipé d'au moins un orifice et/ou une buse pour la distribution du liquide.

Avantageusement, pour ce mode de réalisation, les moyens de séparation du gaz et du liquide peuvent être agencés autour de la conduite verticale. De plus, les moyens de séparation du gaz et du liquide sont disposés à proximité des tubes horizontaux des moyens de distribution. Préférentiellement, ces moyens de séparation sont situés dans la moitié inférieure de la zone de distribution des fluides, et plus préférentiellement dans le quart inférieur de la zone de distribution.

Selon le mode de réalisation de l'invention (pouvant être combiné à l'un quelconque des modes de réalisation décrits), les moyens de séparation du gaz et du liquide occupent entre 75 et 98 %, et de préférence sensiblement plus de 95 % de la section de la colonne disponible pour le passage de la phase vapeur. Ainsi, la séparation des gouttelettes et du gaz est réalisée sur quasiment toute la section de la colonne, ce qui permet une séparation efficace, ce qui permet de limiter au maximum l'entraînement des gouttelettes jusqu'au plateau collecteur, et a fortiori jusqu'au lit de garnissage supérieur.

Selon un mode de réalisation de l'invention (pouvant être combiné avec les modes de réalisation décrits ci-dessus), les moyens de séparation du gaz et du liquide comportent au moins un (de préférence une pluralité de) élément(s) d'impact, sur le(s)quel(s) les gouttelettes de liquide impactent et s'accumulent puis descendent dans la colonne par gravité. Le principe utilisé pour ce mode de réalisation est la séparation par impact des gouttelettes liquides sur une surface (par exemple métallique), un treillage ou tout autre obstacle mis sur le passage du flux gazeux. On parle alors de séparation par « impaction ». Le principe d'impaction consiste à accumuler les gouttelettes de liquide sur la surface, puis à les regrouper par coalescence, jusqu'à ce que la force de gravité devienne supérieure à la force d'entrainement du gaz. L'obstacle (élément d'impact) peut présenter différents profils. Le flux gazeux est dirigé vers l'obstacle, sur lequel les gouttelettes liquides impactent pour former de grosses gouttes, et, par la suite, former un film liquide par coalescence. La force de gravité peut alors compenser l'effet combiné de l'entraînement gazeux et de la tension superficielle. Le film liquide est alors drainé de l'obstacle (l'élément d'impact) vers le lit de garnissage inférieur.

De manière avantageuse, les éléments d'impact peuvent être métalliques, ou réalisés en tout type de matériau résistant aux conditions de service de la colonne. En outre, les éléments d'impact peuvent être fixés directement sur la colonne ou sur les moyens de distribution du liquide.

Ce mode de réalisation peut être combiné avec des moyens de distribution comprenant une conduite verticale et des tubes horizontaux, par exemple selon la conception de la figure 3. Alternativement (et pour toutes les variantes de réalisation décrites ci-après), ce mode de réalisation peut être adapté à des moyens de distribution de toute forme, notamment à auges ou à spray.

Selon une première variante de ce mode de réalisation, l'élément d'impact peut être formé par une plaque inclinée. La plaque inclinée peut être une plaque ondulée, de manière à favoriser la coalescence des gouttes de liquide afin de former un film liquide au niveau des ondulations. En outre, la plaque peut avoir, en section, sensiblement la forme d'un L inversé, c'est-à-dire avec la tête en bas (c'est-à-dire sensiblement la forme d'un gamma Γ). Cette forme favorise l'impaction des gouttelettes de liquide, et donc la séparation du gaz et du liquide.

La figure 5 illustre, de manière non limitative, un exemple de réalisation de cette première variante. Un plateau collecteur 1 est placé dans la zone inter-lits entre deux lits de garnissage 7. Tel que représenté, le plateau collecteur 1 comporte plusieurs cheminées équipées de chapeaux pour le passage du gaz. Les moyens de distribution comportent une conduite verticale 5 et un ensemble de tubes horizontaux 6 équipés d'orifices et/ou de buses. La figure 5 illustre uniquement deux lits de garnissage et un plateau collecteur, toutefois la colonne peut comporter plusieurs lits de garnissage, un tel plateau collecteur (avec les moyens de distribution et les moyens de séparation) étant inséré dans chaque zone inter-lits. Les moyens de séparation du gaz et du liquide comportent une pluralité de plaques inclinées 8 en forme sensiblement de L inversé : la partie inférieure du L devient sa partie supérieure, et sa hauteur est inclinée par rapport à un axe vertical. Les plaques inclinées 8 sont agencées juste au-dessus des tubes horizontaux 6 des moyens de distribution. Telles que représentées, les plaques inclinées 8 sont orientées vers le centre de la colonne, de manière à permettre une répartition homogène du flux gazeux. Grâce à la forme et à l'agencement des plaques inclinées 8, seul le gaz GA s'écoule entre les plaques inclinées 8, ce qui permet de limiter l'entraînement des gouttelettes, favorisant ainsi l'efficacité de la colonne.

Selon une deuxième variante de ce mode de réalisation, l'élément d'impact peut former des chicanes qui modifient la trajectoire et la cinématique du gaz afin de projeter préférentiellement les gouttelettes sur les parois. Conformément à une conception de cette variante, les chicanes peuvent être réalisées par des éléments d'impact ayant sensiblement une forme de chevron (ou V inversé), ou tout autre forme modifiant la trajectoire du gaz par des jeux de chicanes. Les moyens de séparation du gaz et du liquide peuvent comprendre plusieurs rangées de chevrons, de préférence entre 1 et 5 rangées. Les chevrons d'une rangée peuvent être décalés par rapport aux rangées voisines, de manière à augmenter le nombre de chicanes, ce qui favorise la séparation du gaz et du liquide.

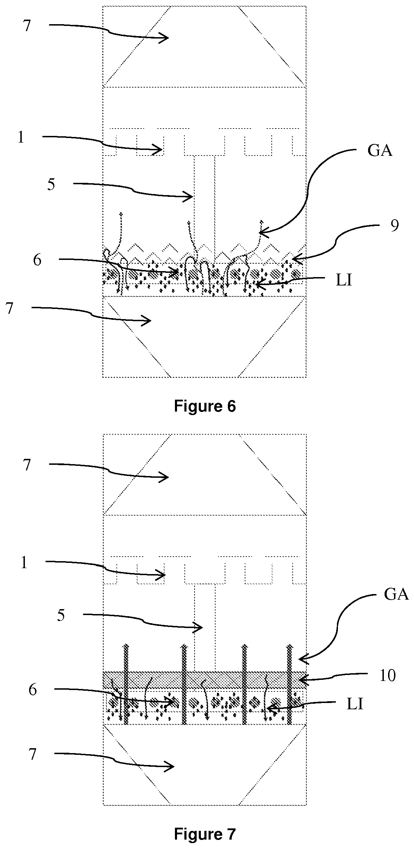

La figure 6 illustre, de manière non limitative, un exemple de réalisation de cette deuxième variante. Un plateau collecteur 1 est placé dans la zone inter-lits entre deux lits de garnissage 7. Tel que représenté, le plateau collecteur 1 comporte plusieurs cheminées équipées de chapeaux pour le passage du gaz. Les moyens de distribution comportent une conduite verticale 5 et un ensemble de tubes horizontaux 6 équipé d'orifices et/ou de buses. La figure 6 illustre uniquement deux lits de garnissage et un plateau collecteur, toutefois la colonne peut comporter plusieurs lits de garnissage, un tel plateau collecteur (avec les moyens de distribution et les moyens de séparation) étant inséré dans chaque zone inter-lits. Les moyens de séparation du gaz et du liquide comportent, à titre d'exemple et de manière non limitative, trois rangées de chevrons 9. Pour cette configuration, la disposition des chevrons 9 de la rangée centrale est décalée par rapport à la disposition des chevrons 9 de la première et de la troisième rangée. Les rangées de chevrons 9 sont agencées juste au-dessus des tubes horizontaux 6 des moyens de distribution. Grâce à la forme (V inversé) et à l'agencement des chevrons 9, seul le gaz GA traverse cet agencement de chevrons 9, alors que le liquide LI est redirigé vers le lit de garnissage 7 inférieur, ce qui permet de limiter l'entraînement des gouttelettes de liquide, favorisant ainsi l'efficacité de la colonne.

Selon une troisième variante de ce mode de réalisation, l'élément d'impact peut être formé par un treillis, le treillis pouvant être compacté dans un volume également appelé matelas. Le treillis et/ou le matelas peut être formé par un grillage, notamment métallique. Les gouttelettes de liquide impactent alors sur le treillis, pour être séparées du gaz.

La figure 7 illustre, de manière non limitative, un exemple de réalisation de cette troisième variante. Un plateau collecteur 1 est placé dans la zone inter-lits entre deux lits de garnissage 7. Tel que représenté, le plateau collecteur 1 comporte plusieurs cheminées équipées de chapeaux pour le passage du gaz. Les moyens de distribution comportent une conduite verticale 5 et un ensemble de tubes horizontaux 6 équipés d'orifices et/ou de buses. La figure 7 illustre uniquement deux lits de garnissage et un plateau collecteur, toutefois la colonne peut comporter plusieurs lits de garnissage, un tel plateau collecteur (avec les moyens de distribution et les moyens de séparation) étant inséré dans chaque zone inter-lits. Les moyens de séparation du gaz et du liquide comportent un matelas de fibres 10. Le treillis (ou matelas de fibres) 10 est placé juste au-dessus des tubes horizontaux 6 des moyens de distribution. Grâce à la forme et à l'agencement du treillis 10, seul le gaz GA traverse ce treillis 10, alors que le liquide LI est redirigé vers le lit de garnissage 7 inférieur, ce qui permet de limiter l'entraînement des gouttelettes de liquide, favorisant ainsi l'efficacité de la colonne.

Selon une quatrième variante de ce mode de réalisation, l'élément d'impact peut être formé par un volume de garnissage. Le garnissage peut être un garnissage vrac ou un garnissage structuré. De préférence, le type de garnissage utilisé en tant que moyen de séparation de gaz et du liquide peut être identique au type de garnissage utilisé dans les lits de garnissage de la colonne. Les gouttelettes de liquide impactent alors sur le garnissage pour être séparées du gaz.

Un exemple de conception de cette quatrième variante peut consister à reprendre la configuration de la figure 7 et à remplacer le treillis 10 par un garnissage.

Selon une cinquième variante de ce mode de réalisation, l'élément d'impact peut avoir sensiblement une forme de corne de bélier (appelée en anglais « vapor horn »). Ce type d'élément d'impact permet à la fois de limiter l'entraînement du liquide et de réorganiser le flux de vapeur.

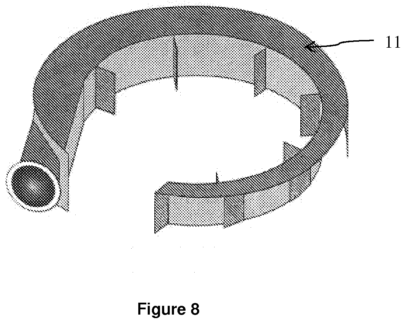

La figure 8 illustre un exemple de réalisation, non limitatif, d'un élément d'impact 11 ayant sensiblement la forme d'une corne de bélier.

Avantageusement, et pour toutes les variantes de réalisations décrites précédemment, les moyens de séparation du gaz et du liquide peuvent comprendre des canules pour faciliter le drainage des gouttelettes de liquide vers le lit de garnissage inférieur, sans contact avec le flux de gaz.

Différents types de moyens de séparation (par exemple plusieurs éléments d'impact) peuvent être combinés pour optimiser la séparation du gaz et du liquide.

La colonne selon l'invention est avantageusement une colonne de lavage aux amines mais elle est adaptée à tous types de solvants utilisés en absorption.

La colonne selon l'invention est adaptée aux écoulements à contre-courant.

La colonne selon l'invention peut être utilisée dans des procédés de traitement de gaz, de captage de CO₂, de distillation de produits liquides, de déshydratation, de séparation de l'air ou d'échange de chaleur. La colonne selon l'invention peut être utilisée pour des applications offshore flottantes ou terrestres.

En outre, l'invention peut concerner tout particulièrement des barges flottantes ou des plateformes offshore, par exemple de type FPSO (de l'anglais Floating Production, Storage and Offloading qui signifie plateforme flottante de production de stockage et de déchargement), ou du type FLNG (de l'anglais Floating Liquefied Natural Gas qui signifie plateforme flottante de gaz naturel liquéfié). Sur les barges flottantes, peuvent être installées également des colonnes de distillation et/ou des colonnes de déshydratation utilisant ce dispositif.

## Revendications

1. Colonne d'échange de matière et/ou de chaleur entre un gaz et un liquide comportant au moins deux lits de garnissage (7), un plateau collecteur (1) agencé entre deux lits de garnissage (7), et des moyens de distribution pour distribuer ledit liquide collecté par ledit plateau collecteur depuis un lit de garnissage supérieur (7) sur un lit de garnissage inférieur (7), lesdits moyens de distribution étant situés en-dessous dudit plateau distributeur (1) et comportant au moins une conduite verticale (5) d'alimentation reliée audit plateau collecteur et au moins un tube (6) sensiblement horizontal relié à ladite conduite d'alimentation, ledit tube sensiblement horizontal (6) comportant au moins un orifice et/ou une buse pour la distribution dudit liquide, **caractérisée en ce que** la colonne comporte en outre des moyens de séparation (8, 9, 10, 11) dudit gaz et dudit liquide, lesdits moyens de séparation (8, 9, 10, 11) étant agencés entre ledit plateau collecteur et lesdits moyens de distribution, et lesdits moyens de séparation (8, 9, 10, 11) dudit gaz et dudit liquide occupent de 75 à 98 % de la section de la colonne disponible pour le passage de la vapeur, et sont disposés plus proches desdits moyens de distribution que dudit plateau collecteur.

2. Colonne selon la revendication 1, dans laquelle lesdits moyens de séparation (8, 9, 10, 11) dudit gaz et dudit liquide comportent au moins un élément d'impact, sur lequel ledit liquide impacte puis descend dans ladite colonne par gravité.

3. Colonne selon la revendication 2, dans laquelle ledit élément d'impact est une plaque inclinée (8).

4. Colonne selon la revendication 3, dans laquelle ladite plaque (8) a sensiblement une forme de L inversé.

5. Colonne selon l'une des revendications 2 à 4, dans laquelle ledit élément d'impact comporte au moins une chicane.

6. Colonne selon la revendication 5, dans laquelle ladite chicane est formée par au moins un chevron (9).

7. Colonne selon l'une des revendications 2 à 6, dans laquelle ledit élément d'impact est formé par un treillis ou matelas de fibres (10).

8. Colonne selon l'une des revendications 2 à 7, dans laquelle ledit élément d'impact est formé par un garnissage.

9. Colonne selon l'une des revendications 2 à 8, dans laquelle ledit élément d'impact a sensiblement la forme d'une corne de bélier (11).

10. Colonne selon l'une des revendications précédentes, dans laquelle lesdits moyens de séparation (8, 9, 10, 11) dudit gaz et dudit liquide comportent en outre au moins une canule pour le drainage dudit liquide.

11. Colonne selon l'une des revendications précédentes, dans laquelle lesdits moyens de séparation (8, 9, 10, 11) dudit gaz et dudit liquide sont agencés autour de ladite conduite verticale d'alimentation (5).

12. Colonne selon l'une des revendications précédentes, dans laquelle ledit plateau collecteur (1) comporte au moins une cheminée (2) pour le passage dudit gaz.

13. Utilisation d'une colonne selon l'une des revendications précédentes pour un procédé de traitement de gaz, de captage de gaz acides, de distillation, de déshydratation ou de séparation d'air.

## Patentansprüche

1. Kolonne zum Austausch von Stoff und/oder Wärme zwischen einem Gas und einer Flüssigkeit, umfassend mindestens zwei Füllkörperbetten (7), einen Sammelboden (1), der zwischen zwei Füllkörperbetten (7) angeordnet ist, und Verteilungsmittel zum Verteilen der von dem Sammelboden gesammelten Flüssigkeit von einem oberen Füllkörperbett (7) auf ein unteres Füllkörperbett (7), wobei die Verteilungsmittel unterhalb des Verteilerbodens (1) angeordnet sind und mindestens eine vertikale Beschickungsleitung (5), die mit dem Sammelboden verbunden ist, und mindestens ein im Wesentlichen horizontales Rohr (6) umfassen, das mit der Beschickungsleitung verbunden ist, wobei das im Wesentlichen horizontale Rohr (6) mindestens eine Öffnung und/oder Düse zur Verteilung der Flüssigkeit umfasst, **dadurch gekennzeichnet, dass** die Kolonne außerdem Mittel zur Trennung (8, 9, 10, 11) des Gases und der Flüssigkeit umfasst, wobei die Trennmittel (8, 9, 10, 11) zwischen dem Sammelboden und den Verteilungsmitteln angeordnet sind und die Mittel zum Trennen (8, 9, 10, 11) des Gases und der Flüssigkeit 75 bis 98% des für den Durchtritt von Dampf verfügbaren Querschnitts der Kolonne einnehmen und näher bei den Verteilungsmitteln als bei dem Sammelboden angeordnet sind.

2. Kolonne nach Anspruch 1, wobei die Mittel zum Trennen (8, 9, 10, 11) des Gases und der Flüssigkeit mindestens ein Aufprallelement umfassen, auf das die Flüssigkeit aufprallt und dann mittels Schwerkraft in der Kolonne absteigt.

3. Kolonne nach Anspruch 2, wobei das Aufprallelement eine geneigte Platte (8) ist.

4. Kolonne nach Anspruch 3, wobei die Platte (8) im Wesentlichen die Form eines umgekehrten L hat.

5. Kolonne nach einem der Ansprüche 2 bis 4, wobei das Aufprallelement mindestens eine Schikane umfasst.

6. Kolonne nach Anspruch 5, wobei die Schikane von mindestens einer Zickzackleiste (9) gebildet wird.

7. Kolonne nach einem der Ansprüche 2 bis 6, wobei das Aufprallelement von einem Geflecht oder einer Fasermatte (10) gebildet wird.

8. Kolonne nach einem der Ansprüche 2 bis 7, wobei das Aufprallelement von einer Bestückung gebildet wird.

9. Kolonne nach einem der Ansprüche 2 bis 8, wobei das Aufprallelement im Wesentlichen die Form eines Widderhorns (11) hat.

10. Kolonne nach einem der vorhergehenden Ansprüche, wobei die Mittel zum Trennen (8, 9, 10, 11) des Gases und der Flüssigkeit außerdem mindestens eine Kanüle zum Ablassen der Flüssigkeit umfassen.

11. Kolonne nach einem der vorhergehenden Ansprüche, wobei die Mittel zum Trennen (8, 9, 10, 11) des Gases und der Flüssigkeit um die vertikale Beschickungsleitung (5) herum angeordnet sind.

12. Kolonne nach einem der vorhergehenden Ansprüche, wobei der Sammelboden (1) mindestens einen Abzug (2) für den Durchtritt des Gases umfasst.

13. Verwendung einer Kolonne nach einem der vorhergehenden Ansprüche für ein Verfahren zur Gasbehandlung, Sauergasabscheidung, Destillation, Dehydratisierung oder Luftzerlegung.

## Claims

1. Column for exchanging material and/or heat between a gas and a liquid comprising at least two packing beds (7), a collector tray (1) arranged between two packing beds (7), and distribution means for distributing said liquid collected by said collector tray from an upper packing bed (7) to a lower packing bed (7), said distribution means being situated below said collector tray (1) and comprising at least one vertical supply duct (5) linked to said collector tray and at least one substantially horizontal pipe (6) linked to said supply duct, said substantially horizontal pipe (6) comprising at least one orifice and/or one nozzle for the distribution of said liquid, **characterized in that** the column further comprises means (8, 9, 10, 11) for separating said gas and said liquid, said separation means (8, 9, 10, 11) being arranged between said collector tray and said distribution means, and said means (8, 9, 10, 11) for separating said gas and said liquid occupy from 75 to 98% of the section of the column available for the passage of the vapor, and are arranged closer to said distribution means than to said collector tray.

2. Column according to Claim 1, in which said means (8, 9, 10, 11) for separating said gas and said liquid comprise at least one impact element, on which said liquid impacts then descends in said column by gravity.

3. Column according to Claim 2, in which said impact element is an inclined plate (8).

4. Column according to Claim 3, in which said plate (8) is substantially in the form of an inverted L.

5. Column according to one of Claims 2 to 4, in which said impact element comprises at least one chicane.

6. Column according to Claim 5, in which said chicane is formed by at least one chevron (9).

7. Column according to one of Claims 2 to 6, in which said impact element is formed by a lattice or mat of fibers (10).

8. Column according to one of Claims 2 to 7, in which said impact element is formed by a packing.

9. Column according to one of Claims 2 to 8, in which said impact element is substantially in the form of a ram's horn (11).

10. Column according to one of the preceding claims, in which said means (8, 9, 10, 11) for separating said gas and said liquid further comprise at least one canula for draining said liquid.

11. Column according to one of the preceding claims, in which said means (8, 9, 10, 11) for separating said gas and said liquid are arranged around said vertical supply duct (5).

12. Column according to one of the preceding claims, in which said collector tray (1) comprises at least one riser (2) for the passage of said gas.

13. Use of a column according to one of the preceding claims for a gas treatment, acid gas capture, distillation, dehydration or air separation method.
